# EUROPÄISCHE PATENTSCHRIFT

(11) **EP 2 742 901 B1**
(45) Veröffentlichungstag und Bekanntmachung des Hinweises auf die Patenterteilung: **08.08.2018**
(21) Anmeldenummer: 13195994.2
(22) Anmeldetag: 06.12.2013
(51) Int. Cl.: A61C 7/22, A61C 7/20, A61C 8/00

(54) **Vorrichtung zur kieferorthopädischen Korrekturbehandlung, insbesondere zur Behebung der Fehlstellung von Backenzähnen**
Device for corrective orthodontic treatment, in particular for treating incorrectly placed molars
Dispositif de traitement de correction orthopédique de la mâchoire, notamment pour la suppression de la mauvaise position de molaires

(30) Priorität: 12.12.2012 DE 202012011899 U
(43) Veröffentlichungstag der Anmeldung: 18.06.2014
(73) Patentinhaber: Promedia A. Ahnfeldt GmbH, 57080 Siegen (DE)
(72) Erfinder: Ahnfeldt, Hartwig, 57080 Siegen (DE); Hahn, Mathias, 58644 Iserlohn (DE)
(74) Vertreter: advotec.

(56) Entgegenhaltungen:
- DE-A1- 10 053 706
- DE-U1-202010 008 972
- US-A1- 2003 091 952
- US-A1- 2005 221 249

## Beschreibung

Die Erfindung betrifft eine Vorrichtung zur kieferorthopädischen Korrekturbehandlung, insbesondere zur Behebung der Fehlstellung von Backenzähnen, wobei die Vorrichtung einen Palatinalbogen aufweist, der einerseits an mindestens einer Stützvorrichtung befestigt ist und andererseits indirekt an dem jeweiligen Backenzahn federbelastet angreift, wobei im Bereich der freien Enden des vorzugsweise etwa U-förmigen Palatinalbogens jeweils mindestens eine Schubeinheit und/oder mindestens eine Zugeinheit vorgesehen sind, die jeweils aus einem Stützelement und einem Schiebe- bzw. Zugelement sowie einer zwischen diesen angeordneten und dieselben auf Abstand haltenden Feder gebildet sind, wobei jedes Stützelement auf dem Palatinalbogen festklemmbar ausgebildet ist, wobei jedes Schiebe- bzw. Zugelement indirekt an dem jeweilig zu bewegenden Backenzahn befestigbar ist, und wobei mindestens ein Kopplungselement zur Befestigung des Palatinalbogens an der Stützvorrichtung vorgesehen ist.

Vorrichtungen zur Behebung der Fehlstellungen von Backenzähnen sind bekannt und beispielsweise in der US 5,785,520 beschrieben. Diese zeigt eine orthodontische Distalisierungsvorrichtung mit einem Stützrahmenwerk, die ferner eine Einrichtung zum Verankern des Rahmenwerks an zumindest einem Verankerungszahn und Schubelemente aufweist, die federbelastet sind. Die Schubelemente sind zwischen dem Rahmenwerk und einer Vorrichtung zum Befestigen an einem weiteren Zahn von mindestens der einen Seite des Bogens eingesetzt. Die Schubelemente üben eine distalisierende Kraft in Richtung der Längsachse des Bogens im Bereich des Zahnes aus, der gerade distalisiert wird. Die Schubelemente sind auf der Lingualseite des Zahnbogens, vorzugsweise in einer Position mehr in Richtung des basalen Zahnfleisches und der darunter liegenden Knochenstütze des Bogens angeordnet.

Da mit dieser Vorrichtung aufgrund der Anbringung des Stützrahmenwerks an dem bzw. den Verankerungszahn bzw. -zähnen und der mit dem Stützrahmenwerk verbundenen Schubelemente die bestehende Zahnsituation gefährdet wird, eine Nachstellung der federbelasteten Schubelemente sehr umständlich und auch der Weg der Schubelemente sehr begrenzt ist, wurde die Vorrichtung nach der DE 20 2008 007 527 U1 entwickelt, die u.a. ein in einer Hülse axial geführtes und von einer Druckfeder beaufschlagtes Schubelement aufweist, an dessen freiem, aus der Hülse herausragenden Ende ein Anschlussstück vorgesehen ist, das aus einer in den jeweiligen Kiefer einschraubbaren Ankerschraube gebildeten Stützvorrichtung angreift. An einer Außenseite der Hülse ist eine weitere Hülse angeordnet, in deren Innenbohrungen ein parallel zur Hülse verlaufender Distanzstab geführt und gelagert ist, dessen zu dem Anschlussstück gerichtetes Ende sich je nach erforderlicher Auszugslänge des Distanzstabes mit einer sich über einen Teilbereich des Distanzstabes erstreckenden Verzahnung an mindestens einem Rastzahn der weiteren Hülse widerhakenförmig abstützt und dessen von dem Anschlussstück abgewandte Seite sich an einem Transpalatinalbogen, einem Goshgarian-Schloss o.dgl. Element abstützt.

Nachteilig bei dieser Vorrichtung ist die immer noch etwas aufwändige Konstruktion mit relativ vielen Einzelteilen. Zudem ist die körperliche Belastung für den Patienten relativ hoch, da die komplette Montage innerhalb der Mundhöhle des Patienten stattfindet. In der DE202010008972U wird auch eine Vorrichtung zur Behebung der Fehlstellungen von Backzähnen beschrieben.

Der Erfindung liegt die Aufgabe zugrunde, eine Vorrichtung der angegebenen Gattung zu schaffen, bei der nur geringe Friktion auftritt, wobei die Konstruktion der Vorrichtung weiter wesentlich vereinfacht und somit kostengünstiger ist, mit der noch individueller eine Nachstellung des federnden Weges möglich ist, wobei zudem eine relativ große Distanz möglich ist, und die komplett außerhalb der Mundhöhle des Patienten vorbereitet und anschließend als gesamtes Teil in die Mundhöhle eingesetzt werden kann, wobei die körperlichen Belastungen für den jeweiligen Patienten sehr gering gehalten sind.

Diese Aufgabe wird erfindungsgemäß durch eine Vorrichtung mit den Kennzeichnungsmerkmalen des Patentanspruchs 1 gelöst. Zweckmäßige Weiterbildungen der Erfindung sind in den Unteransprüchen gekennzeichnet.

Bei der erfindungsgemäßen Vorrichtung weist das Stützelement und das Schiebe- bzw. Zugelement zur Aufnahme der Feder jeweils eine dieselben durchdringende Gewindebohrung auf, in die die jeweilige Feder mit voneinander beabstandeten Windungen einschraubbar ist. Dabei durchdringen die seitlichen Schenkel des Palatinalbogens die jeweilige Feder sowie das Stützelement und das Schiebe- bzw. Zugelement. Das Stützelement und das Schiebe- bzw. Zugelement sowie die Feder sind koaxial auf dem Palatinalbogen geführt, so dass keinerlei Friktion beim Ausdehnen oder Zusammendrücken der Feder entsteht. Ein ungewolltes Herausdrehen der Feder bei der Anwendung der Vorrichtung wird dadurch vermieden, dass das Stützelement auf dem Palatinalbogen festgeklemmt ist und das Schiebe- bzw. Zugelement an dem Backenzahn befestigt ist und somit das Stützelement und das Schiebe- bzw. Zugelement sich nicht drehen können.

Jedes Stützelement weist in einer radial zu der Gewindebohrung verlaufenden Querbohrung einen Klemmstift auf, der nach dem Eindrehen zwischen zwei Windungen der Feder auf den Palatinalbogen wirkt und das Stützelement mit demselben verspannt. Durch den Klemmstift in dem jeweiligen Stützelement ist eine Nachstellung des federnden Weges mit sehr einfachen Mitteln und in kürzester Zeit möglich.

Die Feder der Schubeinheit bzw. Schubeinheiten und/oder der Zugeinheit bzw. Zugeinheiten besteht vorzugsweise aus einer Nickel-Titan-Legierung und kann als Druckfeder ausgebildet sein. Dabei weist die Druckfeder offene Windungen auf. Durch die Verwendung einer Feder aus einer Nickel-Titan-Legierung und die offenen Windungen ist gewährleistet, dass die Druckfeder auch eine Zugarbeit verrichten kann, wodurch eine gesonderte Zugfeder nicht benötigt und die Gleichheit der Einzelteile erhöht wird.

Die Feder der Zugeinheit bzw. Zugeinheiten kann aber auch als Zugfeder ausgebildet sein.

Das Schiebe- bzw. Zugelement kann jeweils eine mit Abstand parallel zu der Gewindebohrung verlaufende Durchgangsbohrung zur Aufnahme eines Drahtes o.dgl. zur Abstützung an einem an dem jeweiligen Backenzahn angreifenden Goshgarian-Schloss o.dgl. Element aufweisen, wodurch die Befestigung des Drahtes wesentlich einfacher ist.

Die Stützvorrichtung kann bzw. Stützvorrichtungen können eine in den jeweiligen Kiefer einschraubbare Ankerschraube bzw. mehrere in den jeweiligen Kiefer einschraubbare Ankerschrauben sein. Durch die Verwendung von in den Kiefer einschraubbaren Ankerschrauben wird die Stellung nicht betroffener Zähne nicht gefährdet, da keinerlei Druck auf diese Zähne ausgeübt wird.

Das Kopplungselement bzw. die Kopplungselemente ist bzw. sind vorzugsweise im Bereich des an die seitlichen Schenkel des Palatinalbogens anschließenden und diese miteinander verbindenden Teils desselben angeordnet. Dabei kann jedes Kopplungselement auf seiner zu der Stützvorrichtung bzw. Ankerschraube gerichteten Seite einen kugelförmigen Ansatz aufweisen, der in eine entsprechend ausgebildete Ausnehmung in der Stützvorrichtung bzw. Ankerschraube einclipsbar und festklemmbar ist. Dazu kann jedes Kopplungselement zudem zentral in einer dasselbe durchdringenden Bohrung eine sich vom oberen Teil desselben bis in den kugelförmigen Ansatz erstreckende Klemmschraube aufweisen. Diese Ausbildung der Vorrichtung ermöglicht eine Vorbereitung derselben außerhalb der Mundhöhle des jeweiligen Patienten, so dass die körperlichen Belastungen für den Patienten u.a. durch die geringere Zeitaufwendung für den Eingriff relativ gering gehalten werden. Ferner erhöht sich dadurch die Sicherheit für den Patienten, da durch die Vorbereitung der Vorrichtung außerhalb der Mundhöhle weniger einzelne Kleinteile vorhanden sind, die u.U. verschluckt werden können oder über die Luftröhre zur Lunge gelangen können.

In jedem Kopplungselement kann eine dasselbe durchdringende, radial und mit Abstand zu der Bohrung für die Klemmschraube verlaufende Bohrung zur Aufnahme des die seitlichen Schenkel des Palatinalbogens miteinander verbindenden Teils desselben vorgesehen sein.

Die Vorrichtung besteht aus wenigen, z.T. auch gleichen Teilen und ist sehr einfach aufgebaut, so dass die Kosten für eine derartige Vorrichtung relativ gering gehalten sind.

Nachfolgend wird anhand der Zeichnung eine bevorzugte Ausführungsform der erfindungsgemäßen Vorrichtung näher erläutert.

Es zeigen
- **Fig.** 1: in perspektivischer Darstellung ein Ausführungsbeispiel der Vorrichtung mit Ankerschrauben als Stützvorrichtung, wobei auf der einen Seite des Palatinalbogens eine Schubeinheit und auf der anderen Seite des Palatinalbogens eine Zugeinheit dargestellt ist,
- **Fig. 2**: eine Draufsicht auf die Vorrichtung nach **Fig. 1****,**
- **Fig. 3**: eine Ansicht in Richtung des Pfeils III in **Fig. 2****,**
- **Fig. 4**: eine Ansicht in Richtung des Pfeils IV in **Fig. 2****,**
- **Fig. 5**: eine Teilschnittdarstellung gemäß Schnittlinie V-V in **Fig. 2****,**
- **Fig. 6**: eine Teilschnittdarstellung gemäß Schnittlinie VI-VI in **Fig. 2****,**
- **Fig. 7**: eine Teilschnittdarstellung gemäß Schnittlinie VII-VII in **Fig. 2** und
- **Fig. 8**: einen Teil der erfindungsgemäßen Vorrichtung mit einer Schubeinheit, deren Schubelement mittels eines Drahtes über ein Goshgarian-Schloss an einem zu richtenden Backenzahn angreift.

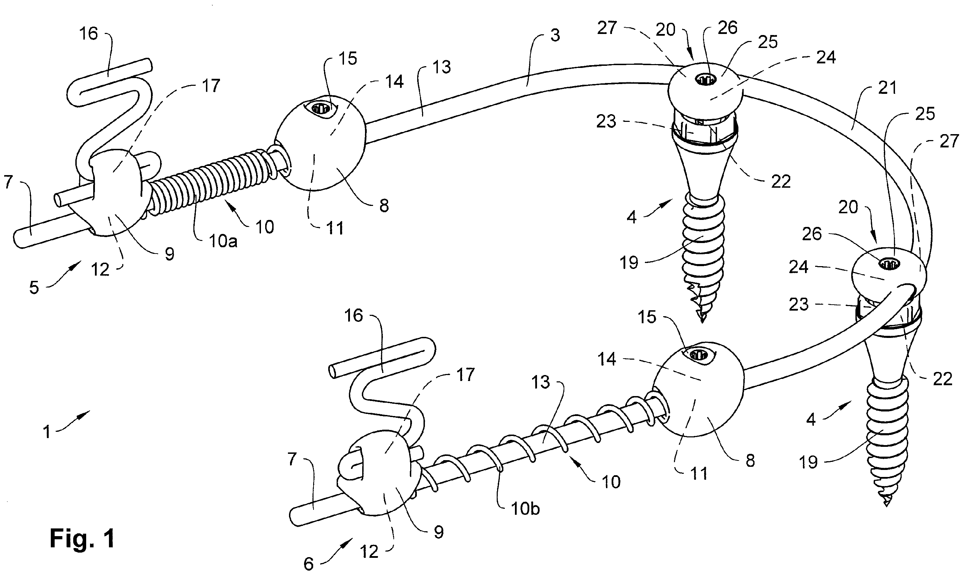

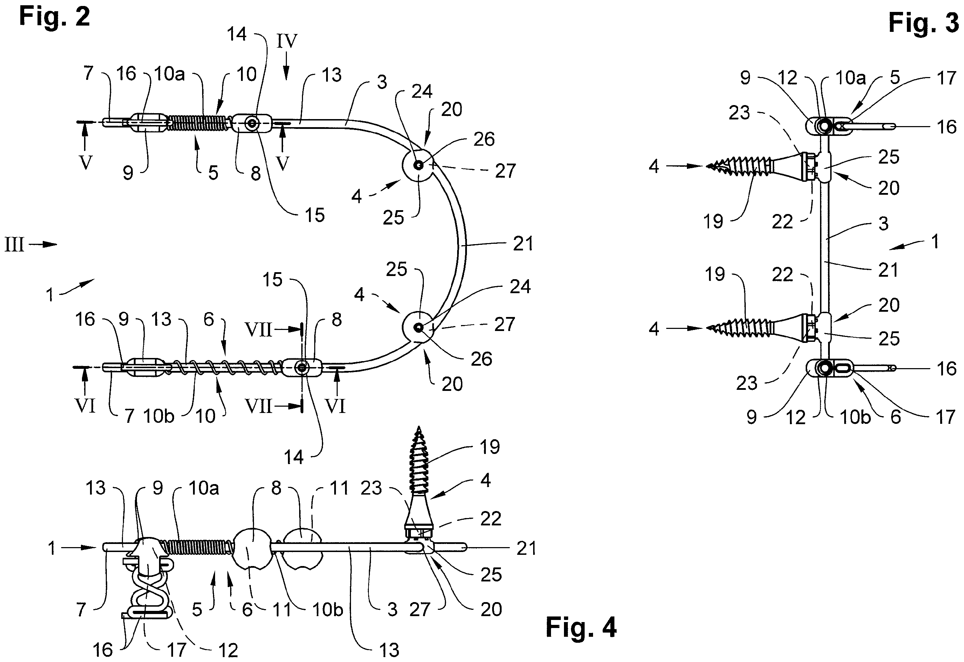

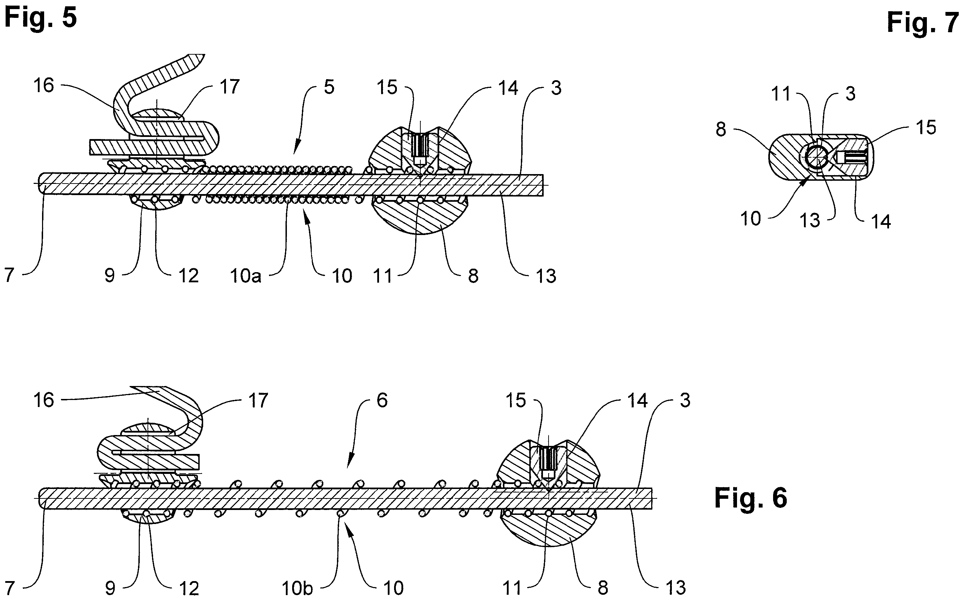

Die in **Fig. 1** bis **8** dargestellte Vorrichtung 1 ist für kieferorthopädische Korrekturbehandlungen, insbesondere zur Behebung der Fehlstellungen von Backenzähnen 2 vorgesehen. Die Vorrichtung 1 weist einen Palatinalbogen 3 auf, der einerseits an mindestens einer Stützvorrichtung 4 befestigt ist und andererseits indirekt an dem jeweiligen Backenzahn 2 federbelastet angreift.

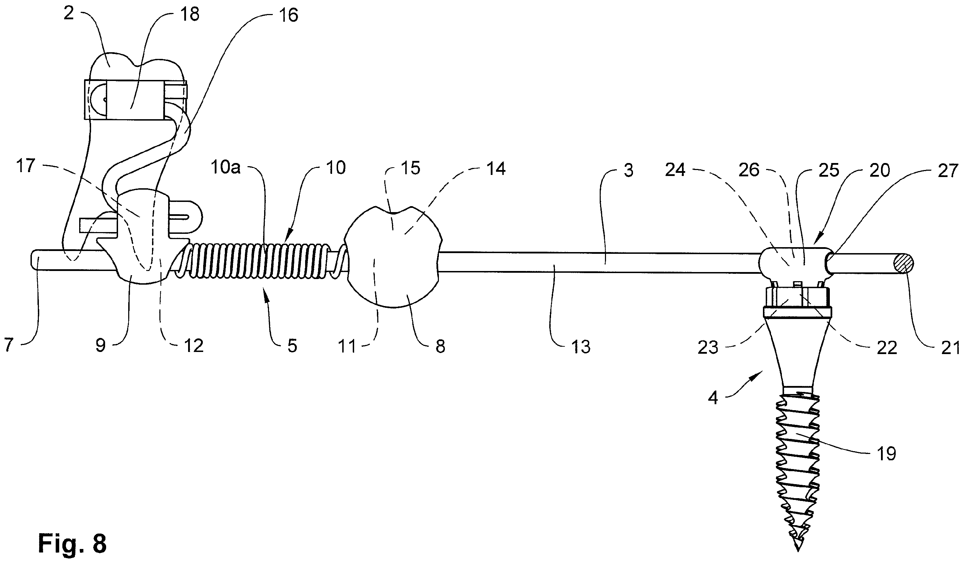

Um die Fehlstellung von Backenzähnen 2 (siehe **Fig. 8**) auf beiden Seiten des Kiefers zu beheben, die beispielsweise durch einen im Bereich der Schneidezähne bzw. deren benachbarter Zähne vorhandenen Engstand erkennbar ist, müssen die Backenzähne 2 gerichtet bzw. nach hinten oder ggf. auch nach vorne geschoben werden. Dazu sind an dem Palatinalbogen 3 verschiebbare Schubeinheiten 5 und/oder verschiebbare Zugeinheiten 6 vorgesehen, die im Bereich der freien Enden 7 des beispielsweise etwa U-förmig ausgebildeten Palatinalbogens 3 angebracht sind.

Die Schubeinheiten 5 bzw. die Zugeinheiten 6 bestehen jeweils aus einem Stützelement 8 und einem Schiebe- bzw. Zugelement 9 sowie einer zwischen diesen angeordneten und dieselben auf Abstand haltenden Feder 10, vorzugsweise aus einer Nickel-Titan-Legierung, die entweder bei den Schubeinheiten 5 und bei den Zugeinheiten 6 als Druckfeder 10a oder bei den Schubeinheiten 5 als Druckfeder 10a und bei den Zugeinheiten 6 als Zugfeder 10b ausgebildet sind. Bei Verwendung der Druckfeder 10a für die Schubeinheiten 5 und die Zugeinheiten 6 weist dieselbe offene Windungen auf, durch die die Druckfeder 10a in Verbindung mit der Materialwahl einerseits für einen Druckeffekt und andererseits für eine Zugeffekt sorgen kann.

Die Stützelemente 8 und die Schiebe- bzw. Zugelemente 9 weisen zur Aufnahme der Federn 10 jeweils eine dieselben durchdringende Gewindebohrung 11, 12 auf, in die die Feder 10 mit voneinander beabstandeten Windungen eingeschraubt ist. Die seitlichen Schenkel 13 des Palatinalbogens 3 durchdringen dabei die jeweilige Feder 10 sowie das Stützelement 8 und das Schiebe- bzw. Zugelement 9, wodurch eine koaxiale Führung der Feder 10 erreicht wird.

Zum Befestigen der Stützelemente 8 auf dem Palatinalbogen 3 sind dieselben festklemmbar ausgebildet. Dazu weist jedes Stützelement 8 in einer radial zu der Gewindebohrung 11 verlaufenden Querbohrung 14 einen Klemmstift 15 auf, der nach dem Eindrehen zwischen zwei Windungen der Feder 10 direkt auf den Palatinalbogen 3 wirkt und das Stützelement 8 mit demselben verspannt.

Die Schiebe- bzw. Zugelemente 9 werden vorzugsweise indirekt an dem jeweiligen Backenzahn 2 befestigt. Dazu dient in der Regel ein Draht 16, der einerseits in einer mit Abstand parallel zu der Gewindebohrung 12 verlaufenden Durchgangsbohrung 17 und andererseits an einem an dem jeweiligen Backenzahn 2 angreifenden Goshgarian-Schloss 18 o.dgl. Element befestigt ist (siehe **Fig. 8**).

Als Stützvorrichtung 4 werden vorzugsweise in den jeweiligen Kiefer einschraubbare Ankerschrauben 19 verwendet (im vorliegenden Ausführungsbeispiel kommen zwei Ankerschrauben 19 zum Einsatz), durch die eine Befestigung der Vorrichtung 1 bzw. des Palatinalbogens 3 an nicht betroffenen Zähnen vermieden und somit deren Stellung nicht gefährdet wird.

Zur Befestigung des Palatinalbogens 3 an den Ankerschrauben 19 sind Kopplungselemente 20 vorgesehen, die im Bereich des an die seitlichen Schenkel 13 des Palatinalbogens 3 anschließenden und diese miteinander verbindenden Teils 21 desselben angeordnet sind. Die Kopplungselemente 20 weisen auf ihren zu den Stützvorrichtungen 4 bzw. Ankerschrauben 19 gerichteten Seiten jeweils einen kugelförmigen Ansatz 22 auf, der in eine entsprechend ausgebildete Ausnehmung 23 in der Stützvorrichtung 4 bzw. Ankerschraube 19 einclipsbar und festklemmbar ist. Dazu ist in jedem Kopplungselement 20 zentral in einer dasselbe durchdringenden Bohrung 24 eine sich vom oberen Teil 25 desselben bis in den kugelförmigen Ansatz 22 erstreckende Klemmschraube 26 vorgesehen, die den vorzugsweise geschlitzt ausgebildeten kugelförmigen Ansatz 22 in der Ausnehmung 23 auseinanderdrückt und festspannt.

Zur Aufnahme des die seitlichen Schenkel 13 des Palatinalbogens 3 miteinander verbindenden Teils 21 desselben ist in jedem Kopplungselement 20, vorzugsweise im oberen Teil 25 desselben eine denselben durchdringende, radial und mit Abstand zu der Bohrung 24 für die Klemmschraube 26 verlaufende Bohrung 27 vorgesehen.

Nachfolgend wird noch kurz die Anwendung der Vorrichtung 1 näher erläutert.

Zunächst wird außerhalb der Mundhöhle des jeweiligen Patienten die Vorrichtung 1 vorbereitet. Dabei wird der Palatinalbogen 3 zunächst mit den Kopplungselementen 20 bestückt. Anschließend werden die Schubeinheiten 5 oder die Zugeinheiten 6 oder eine Schubeinheit 5 und eine Zugeinheit 6, die zuvor je nach Bedarf aus Stützelementen 8, Schiebe- und/oder Zugelementen 9 und Federn 10 sowie Drähten 16 zur Anbindung an die an den Backenzähnen 2 zu befestigenden Goshgarian-Schlösser 18 zusammengesetzt sind, auf die freien Enden 7 der seitlichen Schenkel 13 des Palatinalbogens 3 aufgeschoben, wobei die Schiebe- und /oder Zugelemente 9 mit den Klemmstiften 15 auf dem Palatinalbogen 3 gegen Verschieben leicht fixiert werden. Anschließend beginnen die Arbeiten in der Mundhöhle des Patienten, wobei zunächst das Goshgarian-Schloss 18 bzw. die Goshgarian-Schlösser 18 an den zu richtenden Backenzähnen 2 angebracht wird bzw. werden. Anschließend werden die Ankerschrauben 19 in den Kiefer eingeschraubt und die zuvor vorbereitete Vorrichtung 1 in die Mundhöhle des Patienten eingebracht und mit den Kopplungselementen 20 auf die Ankerschrauben 19 aufgesetzt. Danach wird die Vorrichtung 1 ausgerichtet und die Kopplungselemente 20 festgeklemmt. Die Klemmstifte 15 in den Schiebe- und/oder Zugelementen 9 werden gelöst, woraufhin die Drähte 16 an dem jeweiligen Goshgarian-Schloss 18 angebracht werden. Anschließend werden die Schubeinheiten 5 oder die Zugeinheiten 6 oder die eine Schubeinheit 5 und die eine Zugeinheit 6 vorgespannt und der Klemmstift 15 der Schiebe- und/oder Zugelemente 9 festgezogen.

## Patentansprüche

1. Vorrichtung (1) zur kieferorthopädischen Korrekturbehandlung, insbesondere zur Behebung der Fehlstellung von Backenzähnen (2), wobei die Vorrichtung (1) einen Palatinalbogen (3) aufweist, der einerseits an mindestens einer Stützvorrichtung (4) befestigt ist und andererseits indirekt an dem jeweiligen Backenzahn (2) federbelastet angreift, wobei im Bereich der freien Enden (7) des vorzugsweise etwa U-förmigen Palatinalbogens (3) jeweils mindestens eine Schubeinheit (5) und/oder mindestens eine Zugeinheit (6) vorgesehen sind, die jeweils aus einem Stützelement (8) und einem Schiebe- bzw. Zugelement (9) sowie einer zwischen diesen angeordneten und dieselben auf Abstand haltenden Feder (10) gebildet sind, wobei jedes Stützelement (8) auf dem Palatinalbogen (3) festklemmbar ausgebildet ist, wobei jedes Schiebe- bzw. Zugelement (9) indirekt an dem jeweilig zu bewegenden Backenzahn (2) befestigbar ist, und wobei mindestens ein Kopplungselement (20) zur Befestigung des Palatinalbogens (3) an der Stützvorrichtung (4) vorgesehen ist,
**dadurch gekennzeichnet,**
**dass** das Stützelement (8) und das Schiebe- bzw. Zugelement (9) zur Aufnahme der Feder (10) jeweils eine dieselben durchdringende Gewindebohrung (11, 12) aufweist, in die die jeweilige Feder (10) mit voneinander beabstandeten Windungen einschraubbar ist, wobei die seitlichen Schenkel (13) des Palatinalbogens (3) die jeweilige Feder (10) sowie das Stützelement (8) und das Schiebe- bzw. Zugelement (9) durchdringen.

2. Vorrichtung nach Anspruch 1,
**dadurch gekennzeichnet,**
**dass** jedes Stützelement (8) in einer radial zu der Gewindebohrung (11) verlaufenden Querbohrung (14) einen Klemmstift (15) aufweist, der nach dem Eindrehen zwischen zwei Windungen der Feder (10) auf den Palatinalbogen (3) wirkt und das Stützelement (8) mit demselben verspannt.

3. Vorrichtung nach Anspruch 1 oder 2,
**dadurch gekennzeichnet,**
**dass** die Feder (10) aus einer Nickel-Titan-Legierung gebildet ist.

4. Vorrichtung nach einem der Ansprüche 1 bis 3,
**dadurch gekennzeichnet,**
**dass** die Feder (10) der Schubeinheit (5) bzw. Schubeinheiten (5) und/oder der Zugeinheit (6) bzw. Zugeinheiten (6) als Druckfeder (10a) ausgebildet ist.

5. Vorrichtung nach Anspruch 4, **dadurch gekennzeichnet,**
**dass** die Druckfeder (10a) offene Windungen aufweist.

6. Vorrichtung nach einem der Ansprüche 1 bis 3,
**dadurch gekennzeichnet,**
**dass** die Feder (10) der Zugeinheit (6) bzw. Zugeinheiten (6) als Zugfeder (10b) ausgebildet ist.

7. Vorrichtung nach einem der Ansprüche 1 bis 6,
**dadurch gekennzeichnet,**
**dass** das Schiebe- bzw. Zugelement (9) jeweils eine mit Abstand parallel zu der Gewindebohrung (12) verlaufende Durchgangsbohrung (17) zur Aufnahme eines Drahtes (16) o.dgl. zur Abstützung an einem an dem jeweiligen Backenzahn (2) angreifenden Goshgarian-Schloss (18) o.dgl. Element aufweist.

8. Vorrichtung nach einem der Ansprüche 1 bis 7,
**dadurch gekennzeichnet,**
**dass** die Stützvorrichtung (4) bzw. Stützvorrichtungen (4) eine in den jeweiligen Kiefer einschraubbare Ankerschraube (19) ist bzw. mehrere in den jeweiligen Kiefer einschraubbare Ankerschrauben (19) sind.

9. Vorrichtung nach einem der Ansprüche 1 bis 8,
**dadurch gekennzeichnet,**
**dass** das Kopplungselement (20) bzw. die Kopplungselemente (20) im Bereich des an die seitlichen Schenkel (13) des Palatinalbogens (3) anschließenden und diese miteinander verbindenden Teils (21) desselben angeordnet ist bzw. sind.

10. Vorrichtung nach einem der Ansprüche 1 bis 9,
**dadurch gekennzeichnet,**
**dass** jedes Kopplungselement (20) auf seiner zu der Stützvorrichtung (4) bzw. Ankerschraube (19) gerichteten Seite einen kugelförmigen Ansatz (22) aufweist, der in eine entsprechend ausgebildete Ausnehmung (23) in der Stützvorrichtung (4) bzw. Ankerschraube (19) einclipsbar und festklemmbar ist.

11. Vorrichtung nach einem der Ansprüche 1 bis 10,
**dadurch gekennzeichnet,**
**dass** jedes Kopplungselement (20) zentral in einer dasselbe durchdringenden Bohrung (24) eine sich vom oberen Teil (25) desselben bis in den kugelförmigen Ansatz (22) erstreckende Klemmschraube (26) aufweist.

12. Vorrichtung nach einem der Ansprüche 1 bis 11,
**dadurch gekennzeichnet,**
**dass** in jedem Kopplungselement (20) eine dasselbe durchdringende, radial und mit Abstand zu der Bohrung (24) für die Klemmschraube (26) verlaufende Bohrung (27) zur Aufnahme des die seitlichen Schenkel (13) des Palatinalbogens (3) miteinander verbindenden Teils (21) desselben vorgesehen ist.

## Claims

1. A device (1) for orthodontic corrective treatment, in particular for correcting the malposition of molars (2), the device (1) comprising a palatal arch (3) which is fastened to at least one support device (4) on the one hand and indirectly engages with the respective molar (2) in a spring-loaded manner on the other hand, at least one thrust unit (5) and/or at least one tension unit (6) being provided in the area of each of the free ends (7) of the preferably approximately U-shaped palatal arch (3) and each being made of a support element (8) and a thrust or tension element (9), respectively, as well as being made of a spring (10) arranged therebetween and keeping the same at a distance, each support element (8) being realized so as to be able to be clamped on the palatal arch (3), each thrust or tension element (9) being able to be indirectly fastened to the respective molar (2) to be moved, at least one coupling element (20) being provided for fastening the palatal arch (3) to the support device (4),
**characterized in that**
the support element (8) and the thrust or tension element (9) each comprise a thread bore (11, 12) penetrating the support element (8) and the thrust or tension element (9) in order to receive the spring (10), the respective spring (10), when having coils distanced from each other, being able to be screwed into the thread bore (11, 12), the lateral arms (13) of the palatal arch (3) penetrating the respective spring (10) as well as the support element (8) and the thrust or tension element (9).

2. The device according to claim 1,
**characterized in that**
each support element (8) comprises a clamping pin (15) in a transverse bore (14) extending radial to the thread bore (11), said clamping pin (15) acting on the palatal arch (3) and tensioning the support element (8) with the palatal arch (3) after being screwed between two coils of the spring (10).

3. The device according to claim 1 or 2,
**characterized in that**
the spring (10) is made of a nickel-titanium alloy.

4. The device according to any one of the claims 1 to 3,
**characterized in that**
the spring (10) of the thrust unit (5) or thrust units (5) and/or of the tension unit (6) or tension units (6) is realized as a compression spring (10a).

5. The device according to claim 4,
**characterized in that**
the compression spring (10a) has open coils.

6. The device according to any one of the claims 1 to 3,
**characterized in that**
the spring (10) of the tension unit (6) or tension units (6) is realized as a tension spring (10b).

7. The device according to any one of the claims 1 to 6,
**characterized in that**
the thrust and tension element (9) each have a through bore (17) extending at a distance parallel to the thread bore (12) in order to receive a wire (16) or similar for being supported at a Goshgarian lock (18) or a similar element engaging at the respective molar (2).

8. The device according to any one of the claims 1 to 7,
**characterized in that**
the support device (4) is or the support devices (4) are an anchor screw (19) or several anchor screws (19), respectively, which can be screwed into the respective jaw.

9. The device according to any one of the claims 1 to 8,
**characterized in that**
the coupling element (20) is or the coupling elements (20) are, respectively, arranged in the area of the part (21) of the palatal arch (3), which is adjacent to the lateral arms (13) of the palatal arch (3) and connects these to each other.

10. The device according to any one of the claims 1 to 9,
**characterized in that**
each coupling element (20) comprises a spheroid protrusion (22) on its side facing towards the support device (4) or the anchor screw (19), said protrusion (22) being able to be clamped or clicked into a correspondingly formed recess (23) in the support device (4) or rather the anchor screw (19).

11. The device according to any one of the claims 1 to 10,
**characterized in that**
centrally in a bore (24) penetrating the coupling element (20), each coupling element (20) comprises a clamping screw (26), which extends from the upper part (25) of the coupling element (20) into the spheroid protrusion (22).

12. The device according to any one of the claims 1 to 11,
**characterized in that**
in each coupling element (20), a bore (27), which penetrates the coupling elements (20) and extends radially and at a distance to the bore (24) for the clamping screw (26), is provided so as to receive the part (21) of the palatal arch (3) connecting the lateral arms (13) of the palatal arch (3).

## Revendications

1. Dispositif (1) pour le traitement correctif orthodontique, en particulier pour la réparation de la malposition des molaires (2), le dispositif (1) comprenant un arc palatin (3) qui est fixé à au moins un dispositif de support (4) d'un coté et engage indirectement avec la molaire (2) respective de manière chargée de ressort de l'autre coté, au moins une unité de poussée (5) et/ou au moins une unité de tension (6) étant prévue(s) dans la zone de chaque extrémité libre (7) de l'arc palatin (3) préférablement environ en forme de U et chaque étant fait d'un élément de support (8) et d'un élément de poussée ou de tension (9), respectivement, ainsi qu'un ressort (10) disposé entre les deux et tenant les mêmes à distance les uns aux autres, chaque élément de support (8) étant réalisé de manière à être serré sur l'arc palatin (3), chaque élément de poussée ou de tension (9) pouvant être fixé indirectement à la molaire (2) respective à être bougée, au moins un élément d'accouplement (20) étant prévu pour fixer l'arc palatin (3) au dispositif de support (4),
**caractérisé en ce que**
l'élément de support (8) et l'élément de poussée ou de tension (9) comprend à chaque fois un perçage de filetage (11, 12) pénétrant l'élément de support (8) et l'élément de poussée ou de tension (9) pour recevoir le ressort (10), le ressort (10) respectif, quand il a des spires espacées les unes aux autres, pouvant être vissé dans le perçage de filetage (11, 12), les jambes latéraux (13) de l'arc palatin (3) pénétrant le ressort (10) respectif ainsi que l'élément de support (8) et l'élément de poussée ou de tension (9).

2. Dispositif selon la revendication 1,
**caractérisé en ce que**
chaque élément de support (8) comprend une cheville de serrage (15) dans un perçage transversal (14) s'étendant radialement au perçage de filetage (11), ladite cheville de serrage (15) agissant sur l'arc palatin (3) et haubanant l'élément de support (8) avec l'arc palatin (3) après la cheville de serrage (15) a été vissée entre deux spires du ressort (10).

3. Dispositif selon la revendication 1 ou 2,
**caractérisé en ce que**
le ressort (10) est fait d'un alliage nickel-titane.

4. Dispositif selon l'une quelconque des revendications 1 à 3,
**caractérisé en ce que**
le ressort (10) de l'unité de poussée (5) ou des unités de poussée (5) et/ou de l'unité de tension (6) ou des unités de tension (6) est réalisé en tant que ressort de pression (10a).

5. Dispositif selon la revendication 4,
**caractérisé en ce que**
le ressort de pression (10a) a des spires ouvertes.

6. Dispositif selon l'une quelconque des revendications 1 à 3,
**caractérisé en ce que**
le ressort (10) de l'unité de tension (6) ou des unités de tension (6) est réalisé en tant que ressort de traction (10b).

7. Dispositif selon l'une quelconque des revendications 1 à 6,
**caractérisé en ce que**
l'élément de poussée et de tension (9) chacun ont un perçage transversal (17) s'étendant à une distance parallèle au perçage de filetage (12) pour recevoir un fil (16) ou similaire pour être supporté à un serrage Goshgarian (18) ou un élément similaire s'engageant à la molaire (2) respective.

8. Dispositif selon l'une quelconque des revendications 1 à 7,
**caractérisé en ce que**
le dispositif de support (4) est ou les dispositifs de support (4) sont un scellement (19)/des plusieurs scellements (19), respectivement, qui peut être vissé(s) dans le maxillaire respectif.

9. Dispositif selon l'une quelconque des revendications 1 à 8,
**caractérisé en ce que**
l'élément d'accouplement (20) est ou les éléments d'accouplement (20) sont, respectivement, disposé(s) dans la zone de la partie (21) de l'arc palatin (3), qui est adjacent aux jambes latéraux (13) de l'arc palatin (3) et reliant ceux-ci les uns aux autres.

10. Dispositif selon l'une quelconque des revendications 1 à 9,
**caractérisé en ce que**
chaque élément d'accouplement (20) comprend une saillie sphéroïde (22) sur son côté orienté vers le dispositif de support (4) ou le scellement (19), ladite saillie sphéroïde (22) pouvant être serrée ou clip-pée dans un évidement (23) formé respectivement dans le dispositif de support (4) ou plus exactement dans le scellement (19).

11. Dispositif selon l'une quelconque des revendications 1 à 10,
**caractérisé en ce que**
central dans un perçage (24) pénétrant l'élément d'accouplement (20), chaque élément d'accouplement (20) comprend un vis de serrage (26), qui s'étend à partir d'une partie supérieure (25) de l'élément d'accouplement (20) dans la saillie sphéroïde (22).

12. Dispositif selon l'une quelconque des revendications 1 à 11,
**caractérisé en ce que**
dans chaque élément d'accouplement (20), un perçage (27), qui pénètre les éléments d'accouplement (20) et s'étend radialement et à une distance du perçage (24) pour le vis de serrage (26), est prévu pour recevoir la partie (21) des éléments d'accouplement (20) reliant les jambes latéraux (13) de l'arc palatin (3) les uns aux autres.
